# EUROPEAN PATENT APPLICATION

(11) **EP 2 413 578 A1**
(43) Date of publication of application: **01.02.2012**
(21) Application number: 10171242.0
(22) Date of filing: 29.07.2010
(51) Int. Cl.: H04M 1/725, G06Q 10/00

(54) **Method and apparatus for changing a profile of an electronic device**

(71) Applicant: Research In Motion Limited, Waterloo, ON N2L 3W8 (CA)
(72) Inventor: Petrou, Charalambos, Waterloo Ontario N2V 1K8 (CA)
(74) Representative: MERH-IP Matias Erny Reichl Hoffmann

(57) **Abstract**

A method and apparatus for changing a profile of an electronic device are provided. a current time provided by a clock device is determined to bet within a given time period prior to a start time associated with calendar event data. A display device is responsively controlled to provide an indication of the calendar event data, the indication comprising a selectable option to change the profile of the electronic device from a first profile to a silent profile between the start time and an end time associated with the calendar event data. Input data indicative that the selectable option has been selected is received. In response, at the start time, the profile of the electronic device is changed from the first profile to the silent profile such that the notification device is controlled to provide inaudible notifications when notification events occur.

## Description

### FIELD

The specification relates generally to electronic devices, and specifically to a method and apparatus for changing a profile of an electronic device.

### BACKGROUND

Electronic device can be generally configured to provide notifications of events such as telephone calls, receipt of e-mails and other network data and the like according to a set of profile data. Often the notifications are audible and can be distracting, as well as waste of battery power and resources at the electronic device.

### BRIEF DESCRIPTIONS OF THE DRAWINGS

Implementations are described with reference to the following figures, in which:

Fig. 1 depicts a block diagram of an electronic device, according to non-limiting implementations;

Fig. 2 depicts a block diagram of elements of the electronic device of Fig. 1, according to non-limiting implementations;

Fig.3 depicts a flow diagram of a method for changing a profile of an electronic device, according to non-limiting implementations;

Fig. 4 depicts an indication of a calendar event including a selectable option for changing a profile of a calendar event to a silent profile during the calendar event, according to non-limiting implementations;

Fig. 5 depicts a block diagram of the electronic device of Fig. 1 having a silent profile during a calendar event, according to non-limiting implementations;

Fig. 6 depicts a flow diagram of a method for changing a profile of an electronic device, according to non-limiting implementations;

Fig. 7 depicts a block diagram of the electronic device, according to non-limiting implementations; and

Fig. 8 depicts an indication of a calendar event including a selectable option for extending the time during which a profile of an electronic device is to remain as a silent profile during the calendar event, according to non-limiting implementations.

### DETAILED DESCRIPTION OF THE IMPLEMENTATIONS

A first aspect of the specification provides a method for changing a profile of an electronic device comprising a processing unit interconnected with a display device, a clock device and at least one notification device, the method implementable in the processing unit, the method comprising: determining that a current time provided by the clock device is within a given time period prior to a start time associated with calendar event data; responsively controlling the display device to provide an indication of the calendar event data, the indication comprising a selectable option to change the profile of the electronic device from a first profile to a silent profile between the start time and an end time associated with the calendar event data; receiving input data indicative that the selectable option has been selected; and, in response, at the start time, changing the profile of the electronic device from the first profile to the silent profile such that the notification device is controlled to provide inaudible notifications when notification events occur.

The method can further comprise, at the end time, changing the profile of the electronic device from the silent profile to the first profile.

The method can further comprise: determining that a given notification event is to occur between the start time and the end time; and, in response, controlling the at least one notification device to provide an associated inaudible notification.

The selectable option can comprise at least one of a virtual button, a radio button, a checkbox, and an option in a drop down menu.

The indication of the calendar event data can comprise further selectable options to at least one of dismiss the indication and control the display device to provide the indication at a later time.

The indication can comprise a reminder of the calendar event data.

The method can further comprise: determining that a second current time provided by the clock device is within a second given time period prior to the end time; responsively controlling the display device to provide a second indication, the second indication comprising an indication of the end time, the second indication comprising a second selectable option to delay changing the profile of the electronic device from the silent profile back to the first profile until a third given time period has passed following the end time; receiving input data indicative that the second selectable option has been selected; and, in response, at a time comprising the third given time period added to the end time, changing the profile of the electronic device from the silent profile back to the first profile. The method can further comprise: repeating the controlling the display device to provide the second indication to determine a later time at which the profile of the electronic device is to be changed from the silent profile back to the first profile; and, changing the profile of the electronic device from the silent profile to the first profile at the later time rather than at the time comprising the third given time period added to the end time.

The method can further comprise: determining that a given notification event is to occur before the start time or after the end time; and, in response, controlling at least one of the notification device and a second notification device to provide an associated audible notification

The notification device can comprise at least one of vibration device, a vibration motor, a light, an LED (light emitting diode) and the display device.

A second aspect of the specification provides an electronic device comprising a processing unit interconnected with a display device, a clock device and at least one notification device, the processing unit enabled to: determine that a current time provided by the clock device is within a given time period prior to a start time associated with calendar event data; responsively control the display device to provide an indication of the calendar event data, the indication comprising a selectable option to change the profile of the electronic device from a first profile to a silent profile between the start time and an end time associated with the calendar event data; receive input data indicative that the selectable option has been selected; and, in response, at the start time, change the profile of the electronic device from the first profile to the silent profile such that the notification device is controlled to provide inaudible notifications when notification events occur.

The processing unit can be further enabled to, at the end time, change the profile of the electronic device from the silent profile to the first profile.

The processing unit can be further enabled to: determine that a given notification event is to occur between the start time and the end time; and, in response, control the at least one notification device to provide an associated inaudible notification.

The selectable option can comprise at least one of a virtual button, a radio button, a checkbox, and an option in a drop down menu.

The indication of the calendar event data can comprise further selectable options to at least one of dismiss the indication and control the display device to provide the indication at a later time.

The indication can comprise a reminder of the calendar event data.

The processing unit can be further enabled to: determine that a second current time provided by the clock device is within a second given time period prior to the end time; responsively control the display device to provide a second indication, the second indication comprising an indication of the end time, the second indication comprising a second selectable option to delay changing the profile of the electronic device from the silent profile back to the first profile until a third given time period has passed following the end time; receive input data indicative that the second selectable option has been selected; and, in response, at a time comprising the third given time period added to the end time, change the profile of the electronic device from the silent profile back to the first profile. The processing unit can be further enabled to: repeat the controlling the display device to provide the second indication to determine a later time at which the profile of the electronic device is to be changed from the silent profile back to the first profile; and, change the profile of the electronic device from the silent profile to the first profile at the later time rather than at the time comprising the third given time period added to the end time.

The processing unit can be further enabled to: determine that a given notification event is to occur before the start time or after the end time; and, in response, control at least one of the notification device and a second notification device to provide an associated audible notification

The notification device can comprise at least one of vibration device, a vibration motor, a light, an LED (light emitting diode) and the display device.

A third aspect of the specification provides a computer program product, comprising a computer usable medium having a computer readable program code adapted to be executed to implement a method for changing a profile of an electronic device comprising a processing unit interconnected with a display device, a clock device and at least one notification device, the method implementable in the processing unit, the method comprising: determining that a current time provided by the clock device is within a given time period prior to a start time associated with calendar event data; responsively controlling the display device to provide an indication of the calendar event data, the indication comprising a selectable option to change the profile of the electronic device from a first profile to a silent profile between the start time and an end time associated with the calendar event data; receiving input data indicative that the selectable option has been selected; and, in response, at the start time, changing the profile of the electronic device from the first profile to the silent profile such that the notification device is controlled to provide inaudible notifications when notification events occur.

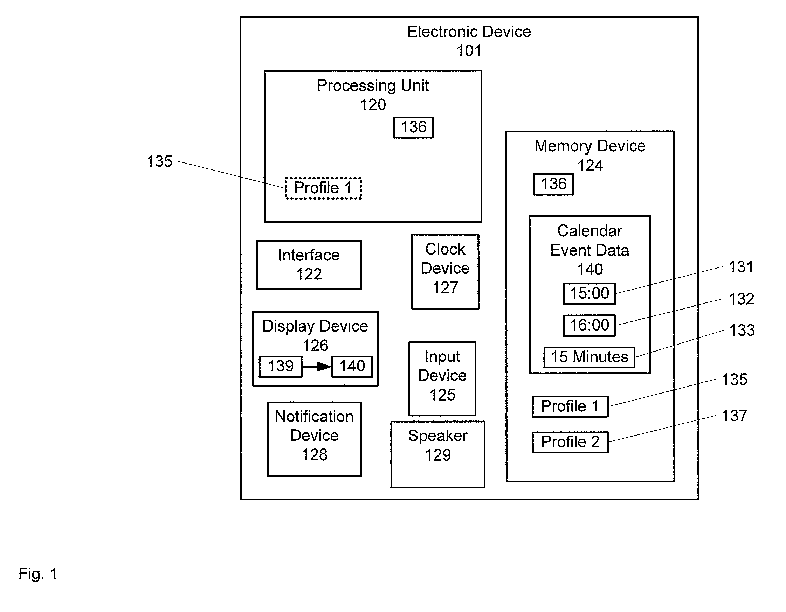

Fig. 1 depicts an electronic device 101, according to non-limiting implementations. Electronic device 101, which will also be referred to hereafter as device 101, comprises a processing unit 120 interconnected with a communication interface 122, a memory device 124, an input device 125, a display device 126, a clock device 127, at least one notification device 128, and a speaker 129, for example via a computing bus (not depicted). Memory device 124 stores calendar event data 140 which comprises data indicative of a start time 131 of an associated calendar event, data indicative of an end time 132 of the associated calendar event, and in some implementations, any suitable combination of data indicative of a textual description of the associated calendar event (not depicted), a list of attendees (not depicted), an indicator of a location of the associated calendar event (not depicted) or the like. Calendar event data 140 can also comprise data indicative of a given time period 133 prior to start time 131 that a reminder for the calendar event associated with calendar event data 140 is to be provided. Memory device 124 further stores first profile data 135 and second profile data 137 (also referred to respectively, as profile data 135 and profile data 137, and collectively as profile data 135, 137), each of which comprise data indicating how at least one notification device 128 and/or speaker 129 is to be controlled when a notification event occurs, as described below. It is appreciated that at least one set of profile data 135, 137 comprises a silent profile wherein at least one notification device 128 is controlled to provide an inaudible notification when an associated notification event occurs. It is further appreciate that the number of set of profile data is not unduly limiting and that any suitable number of sets of profile data can be stored in memory device 124, with one of the sets of profile data 135, 137 comprising a silent profile. For example, as depicted, device 101 is being controlled according to a current profile defined by profile data 135, with profile data 135 designated as current profile data, by profile data 120 being processed by processing unit 120 (as depicted) and/or by profile data 135 being designated as current via any suitable pointer, indicator (not depicted) or the like in memory device 124.

While not depicted, it is also appreciated that, in some implementations, calendar event data 140 and/or profile data 135, 137 can be stored in any suitable external memory device and/or any suitable external database, accessible to device 101, for example via interface 122.

Device 101 can further comprise an application 136 for automatically switching a current profile of device 101 from a first profile, for example as defined by profile data 135, to a silent profile, for example as defined by profile data 137. In non-limiting example described hereafter, profile data 135 comprises a first profile that is initially designated as current, and profile data 137 comprises a silent profile.

Application 136 can be stored in memory device 124 and processed by processing unit 120. In particular processing of application 136 enables device 101 to change the behaviour of at least one notification device 128 from providing audible notifications to providing inaudible notifications by changing the current profile from a first profile to a silent profile during the calendar event as defined by start time data 131 and end time data 132, as will be described hereafter.

In general, device 101 comprises any suitable electronic device for processing application 136, including but not limited to any suitable combination of computing devices, desktop computing devices, laptop computing devices, portable computing device, mobile electronic devices, PDAs (personal digital assistants), cellphones, smartphones and the like. Other suitable electronic devices are within the scope of present implementations.

Processing unit 120 comprises any suitable processor, or combination of processors, including but not limited to a microprocessor, a central processing unit (CPU) and the like. Other suitable processing units are within the scope of present implementations.

Communication interface 122 comprises any suitable communication interface, or combination of communication interfaces. In particular communication interface 122 is enabled to communicate with via a network (not depicted), the network being wired and/or wireless as desired. Accordingly, communication interface 122 (which will also be referred to as interface 122 hereafter) is enabled to communicate according to any suitable protocol which is compatible with the network, including but not limited to wired protocols, USB (universal serial bus) protocols, serial cable protocols, wireless protocols, cell-phone protocols, wireless data protocols, Bluetooth protocols, NFC (near field communication) protocols and/or a combination, or the like. In some implementations, interface 122 can be enabled to communicate with remote computing devices (e.g. servers, other computing devices, other mobile electronic devices, etc.), via any suitable communication network according to any suitable protocol, including but not limited to packet based protocols, Internet protocols, analog protocols, PSTN (public switched telephone network) protocols, WiFi protocols, WiMax protocols and the like, and/or a combination. Other suitable communication interfaces and/or protocols are within the scope of present implementations.

Input device 125 is generally enabled to receive input data, and can comprise any suitable combination of input devices, including but not limited to a keyboard, a keypad, a pointing device, a mouse, a track wheel, a trackball, a touchpad, a touch screen and the like. Other suitable input devices are within the scope of present implementations.

Memory device 124 can comprise any suitable memory device, including but not limited to any suitable one of, or combination of, volatile memory, non-volatile memory, random access memory (RAM), read-only memory (ROM), hard drive, optical drive, flash memory, magnetic computer storage devices (e.g. hard disks, floppy disks, and magnetic tape), optical discs, and the like. Other suitable memory devices are within the scope of present implementations. In particular, memory device 124 is enabled to store application 136, calendar event data 140, and profile data 135, 137.

Display device 126 comprises circuitry 139 for generating representations of data, for example a representation 141 of application 136, as will be described below. Display device 126 can include any suitable one of or combination of CRT (cathode ray tube) and/or flat panel displays (e.g. LCD (liquid crystal display), plasma, OLED (organic light emitting diode), capacitive or resistive touchscreens, and the like). Circuitry 139 can include any suitable combination of circuitry for controlling the CRT and/or flat panel displays etc., including but not limited to display buffers, transistors, electron beam controllers, LCD cells, plasmas cells, phosphors etc. In particular, display device 126 and circuitry 139 can be controlled by processing unit 120 to generate representation 141.

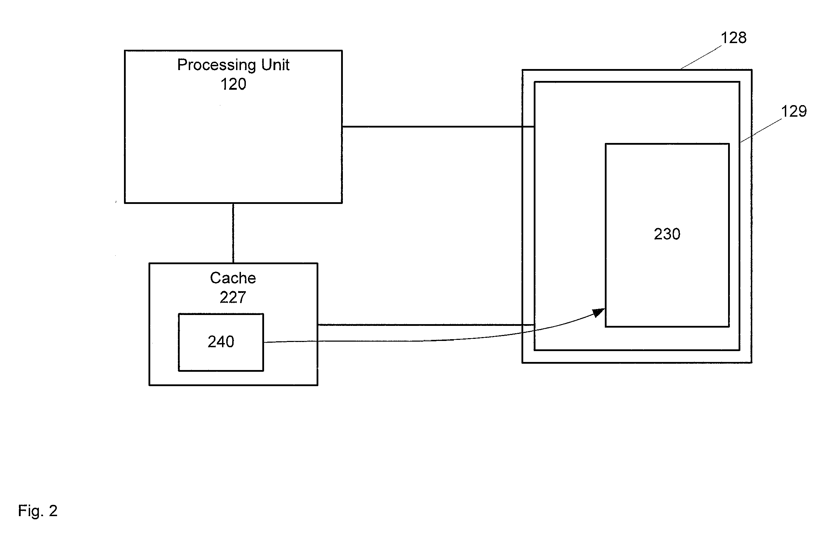

In particular, attention is directed to Fig.2 which depicts non-limiting implementations of display device 126 and circuitry 139, in communication with processing unit 120 and a memory cache 227 (hereinafter cache 227). In some implementations, memory device 124 can comprise cache 227, while in other implementations cache 227 can comprise a separate memory device. Furthermore, processing unit 120 is in communication with cache 227 and further enabled to control circuitry 139. In particular, processing unit is enabled to control an area 230 of circuitry 139 to provide an indication 240 of calendar event data 140.

In implementations depicted in Fig. 2, it is appreciated that circuitry 139 and area 230 comprises, for example, transistors in a flat panel display; however, in other implementations, circuitry 139 can comprise a combination of an electron gun in a CRT, and area 230 can comprise phosphors in a CRT.

Clock device 127 comprises any suitable clock device from which a current time can be determined. In some implementations, clock device 127 can also provide a current date, day, month, year and the like. Alternatively, processing unit 120 can retrieve a current time from a remote clock device via interface 122. In particular non-limiting implementations, clock device 127 comprises any suitable digital clock device.

At least one notification device 128 can comprise any suitable combination of notification devices including but not limited to vibration devices, vibration motors, lights, LEDs (light emitting diodes), display device 126. It is appreciated that at least one notification device 128 is enabled to provide inaudible notifications.

Speaker 129 can comprise any suitable speaker; it is appreciated that speaker 129 is enabled to provide audible notifications.

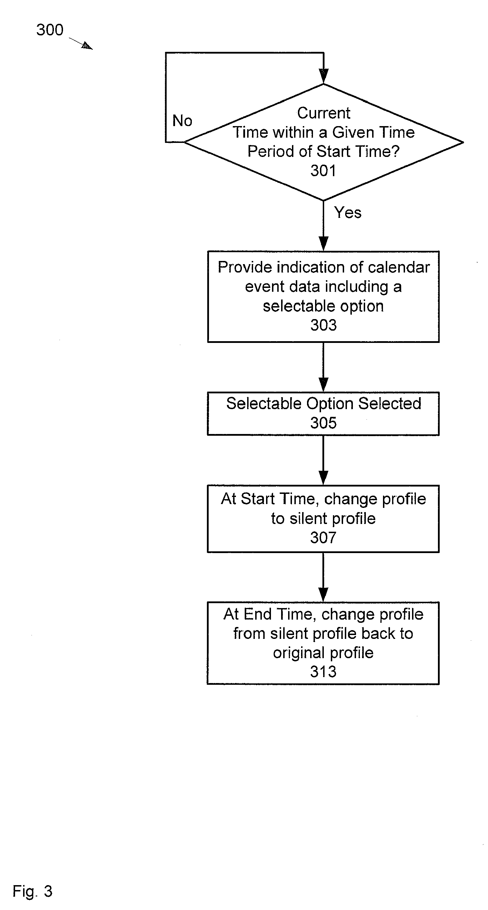

Attention is now directed to Fig. 3 which depicts a method 300 for changing a profile of an electronic device. In order to assist in the explanation of method 300, it will be assumed that method 300 is performed using device 101. Furthermore, the following discussion of method 300 will lead to a further understanding of device 101 and its various components. However, it is to be understood that device 101 and/or method 300 can be varied, and need not work exactly as discussed herein in conjunction with each other, and that such variations are within the scope of present implementations.

At 301 of method 300, processing unit 122 determines that a current time provided by 127 clock device is within given time period 133 prior to start time 131 For example, as depicted in Fig. 1, start time 131 comprises 15:00 and given time period comprises 1 minutes; hence, in these implementations, processing unit 122 determines that a current time provided by clock device 127 is within 15 minutes of 15:00 (e.g. on a given date associated with calendar event data 140), for example at 14:45 and/or a time between 14:45 and 15:00. When the current time is not within given time period 133, prior to start time 131, 301 can repeat until the current time is within the given time period 133.

At 303 of method 300, when the current time is within the given time period 133, processing unit 122 responsively controls display device 126 to provide indication 240 of calendar event data 140, indication 240 comprising a selectable option 401 to change profile of device 101 from a first profile to a silent profile between start time 131 and an end time 132.

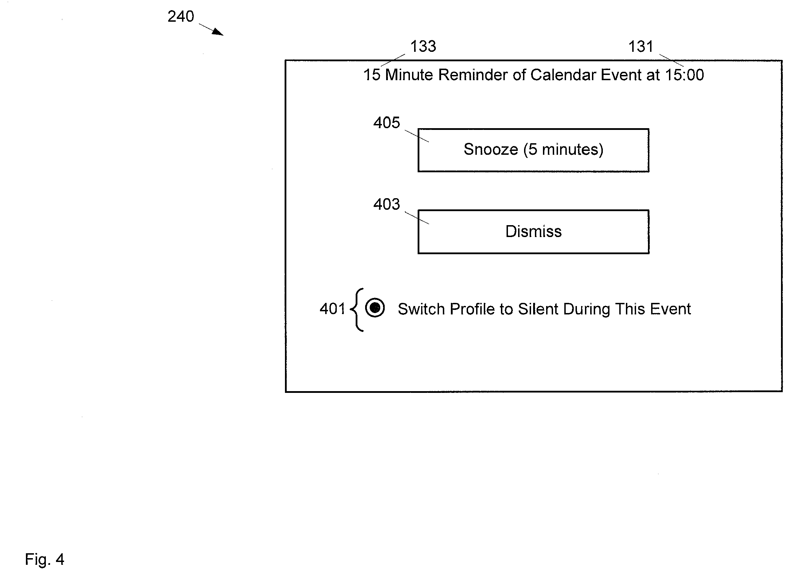

For example, attention is directed to Fig. 4 which depicts non-limiting implementations of indication 240. In these implementations, indication 240 comprises a reminder that a calendar event associated calendar event data 140 is starting at start time 131 and/or within given time period 133. In depicted implementations, selectable option 401 comprises a radio button along with text (i.e. "Switch Profile to Silent During This Event") indicating that a profile of device 101 is to be switched to silent during the calendar event. While selectable option 401 is depicted as a radio button in Fig. 4, selectable option 401 can comprise any suitable combination of at least one virtual button, at least one radio button, at least one checkbox, and at least one option in a drop down menu.

In depicted implementations, indication 240 further comprises a virtual button 403 to dismiss indication 240 and a virtual button 405 to control display device 126 to provide indication 240 again at a later time, for example in 5 minutes or any other suitable time period (the time period being optionally configurable) In other implementations, one or both of virtual buttons 403, 405 can be replaced by any suitable type of selectable option to choose to respectively dismiss indication 240 and control display device 126 to provide indication 240 again at a later time.

Returning to Fig. 3, at 305 of method 300, input data is received via input device 125, the input data indicative that selectable option 401 has been selected. For example, in Fig. 4, the radio button has been selected and hence selectable option 401 has been selected.

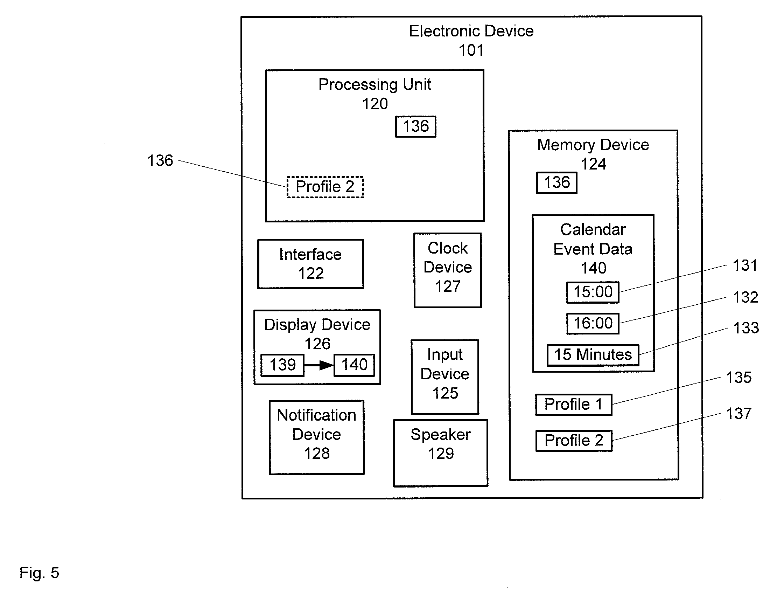

At 307 of method 300, in response to 305, at start time 131 processing unit 120 causes the current profile of device 101 to be changed from the first profile to a silent profile such that notification device 128 is controlled to provide inaudible notifications when notification events occur. For example, as depicted in Fig. 5, which is substantially similar to Fig. 1 with like elements having like numbers, the current profile is changed from first profile as defined by profile data 135 to a silent profile, as defined by profile data 137, by processing profile data 137 at processing unit 120. Alternatively, profile data 137 can be designated as current via any suitable pointer, indicator (not depicted) or the like in memory device 124. In any event, at start time 131, profile data 137 replaces profile data 135 as the current profile.

Returning to Fig. 3, at 313 of method 300, at end time 132 processing unit 120 causes the current profile of device 101 to be changed from the silent profile back the first profile, as in Fig. 1.

Hence, when processing unit 120 determines that a given notification event is to occur between start time 131 and end time 132 (i.e. during the calendar event associated with calendar event data 140), processing unit 120 controls at least one notification device 128 to provide an associated inaudible notification as defined in the silent profile (i.e. profile data 137). When processing unit 120 determines that a given notification event is to occur before start time 131 or after end time 132 (i.e. before or after the calendar event associated with calendar event data 140), processing unit controls at least one of at least one notification device 128 and a second notification device, for example speaker 129, to provide an associated notification as defined in the first profile (i.e. profile data 135).

Non-limiting examples of notification events can include calendar reminders, event reminders, or the like, receipt of data from a network, such as e-mail, SMS (short message service) messages, text messages or the like, and telephone calls or the like, or any other suitable notification event. Hence, during the calendar event associated with calendar data 124, device 101 provides only inaudible notifications of notification events. An option to change the profile to a silent profile during the calendar event is conveniently provided in a reminder, such as indication 240. As a reminder of the calendar event is generally provided anyhow, providing the option to change the profile to a silent profile during the calendar event enables an efficient use of resources at device 101 as the need to receive further input data to change the profile to silent manually during the calendar event is obviated, as well as use of the display device 126 to provide screens showing options of profiles to switch between. For example, the need to receive additional input at processing unit 120, and having processing unit 120 control display device 726 to navigate through a menu system in order to change the profile of device 101 to silent during a calendar event is obviated, hence saving processing resources as well as use of cache 227.

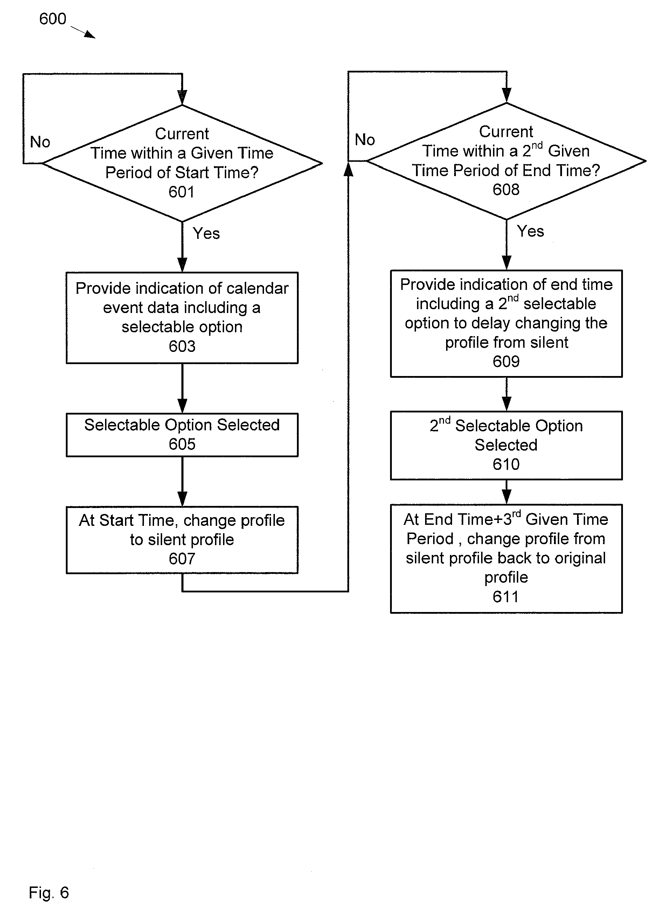

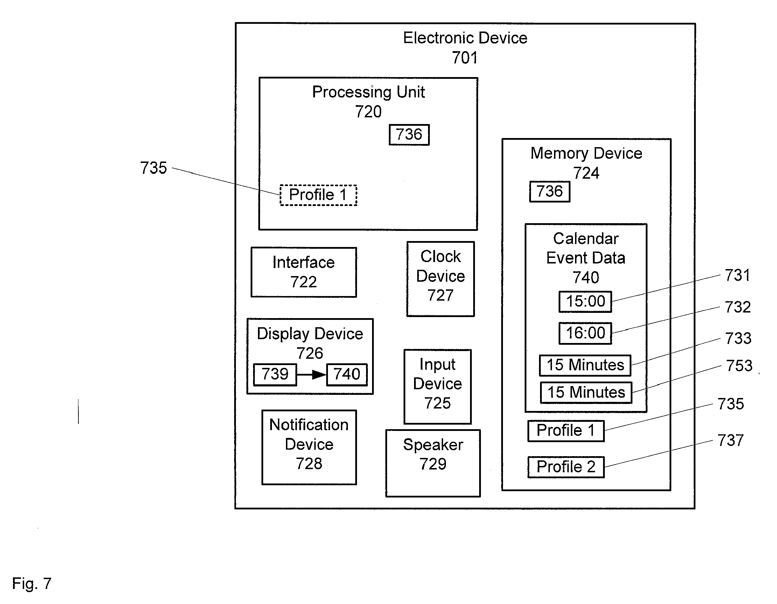

Attention is now directed to Fig. 6 which depicts a method 600 according to non-limiting embodiments. Certain elements of method 600 are substantially similar to Method 300, like elements having like numbers, however preceded by a "6" rather than a "3". For example, 601 is similar to 301.Furthermore, method 600 can be implemented in electronic device 701 depicted in Fig. 7; Fig. 7 is similar to Fig. 1 with like elements having like numbers, however preceded by a "7" rather than a "1". Calendar event data 740, stored in memory device 724 of electronic device 701 (also referred to hereafter as device 701), further comprises a second given time period 753 described below.

Method 600 proceeds to 607 similar to method 300. Then, at 608, processing unit 120 determines that the current time provided by clock device 727 is within second given time period 753 prior to end time 732. Second given time period 753 can be similar or different to given time period 733 and is a time period prior to end time 732 at which a reminder of the end of a calendar event associated with calendar event data 740 is provided. For example, a reminder can be provided 15 minutes prior to the end of the calendar event. It is appreciated that 608 is similar to 601 described above and can repeat until the current time is within second given time period 753 prior to end time 732.

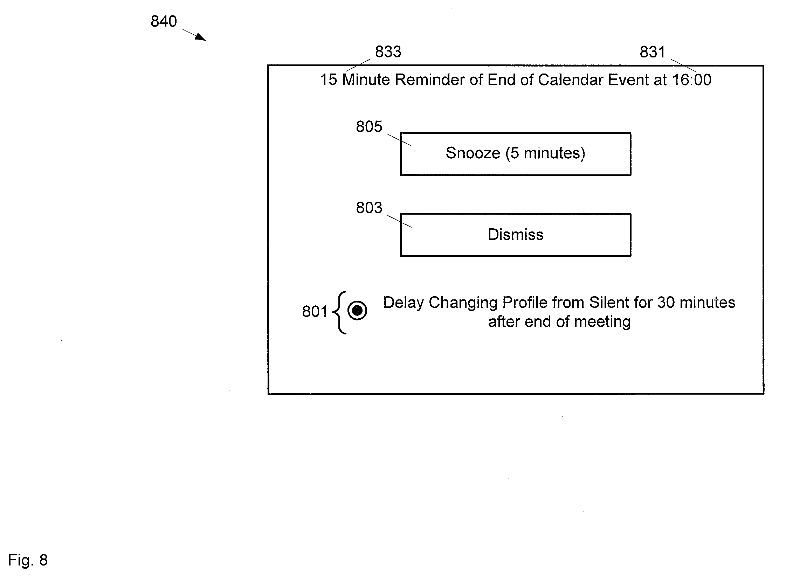

At 609 of method 600, when the current time is within second given time period 753 prior to end time 732, processing unit 720 responsively controls display device 726 to provide second indication 840, as depicted in Fig. 8. Second indication 840 comprises an indication of end time 832 and a selectable option 801 to delay changing profile of device 101 from a silent profile back to first profile until a third given time period has passed following end time 132, for example 30 minutes. In some implementations, the third given time period can be configurable via a menu for presetting the time period and/or from a drop-down menu. The third given time period can also be predetermined and stored in memory device 724. Furthermore, selectable option 801 can be similar or different to selectable option 401. Second indication 840 can comprise virtual buttons 803, 805 similar to virtual buttons 403, 405 described above.

At 610 (similar to 605) input data is received via input device 725 indicative that second selectable option 801 has been selected.

At 611, at a time comprising the third given time period added to end time 732, processing unit 720 causes the profile of device 701 to be changed from the silent profile back to the first profile (similar to 313).

In some implementations, 608 to 610 can be repeated after 610, and prior to 611, with the check in 608 comprising whether the current time is within the third given time period added to end time 732 and/or within a given period of time prior to a time that the silent profile is to be changed back to the first profile.

Alternatively, 610 can cause end time 732 to be updated to a time comprising the third given time period (e.g. 30 minutes) added to end time 732, and repeating 608 to 610 causes end time 732 to be repeatedly updated. Hence at a final end time (i.e. end time 732 plus the number of repeats of 608 to 610 multiplied by third time period), processing unit 720 causes the profile of device 701 to be changed from the silent profile back to the first profile.

In any event, when a calendar event goes past the original end time 732, the time that the profile of device 701 remains as a silent profile can be extended without having to receive additional input, or control display device 726 to navigate through a menu system in order to extend the time or change the profile back to silent once the original end time 732 has passed and the calendar event is running late.

Those skilled in the art will appreciate that in some implementations, the functionality of devices 101, 701 can be implemented using pre-programmed hardware or firmware elements (e.g., application specific integrated circuits (ASICs), electrically erasable programmable read-only memories (EEPROMs), etc.), or other related components. In other implementations, the functionality of devices 101, 701 can be achieved using a computing apparatus that has access to a code memory (not shown) which stores computer-readable program code for operation of the computing apparatus. The computer-readable program code could be stored on a computer readable storage medium which is fixed, tangible and readable directly by these components, (e.g., removable diskette, CD-ROM, ROM, fixed disk, USB drive). Alternatively, the computer-readable program code could be stored remotely but transmittable to these components via a modem or other interface device connected to a network (including, without limitation, the Internet) over a transmission medium. The transmission medium can be either a non-wireless medium (e.g., optical and/or digital and/or analog communications lines) or a wireless medium (e.g., microwave, infrared, free-space optical or other transmission schemes) or a combination thereof.

A portion of the disclosure of this patent document contains material which is subject to copyright protection. The copyright owner has no objection to the facsimile reproduction by any one the patent document or patent disclosure, as it appears in the Patent and Trademark Office patent file or records, but otherwise reserves all copyrights whatsoever.

Persons skilled in the art will appreciate that there are yet more alternative implementations and modifications possible for implementing the implementations, and that the above implementations and examples are only illustrations of one or more implementations. The scope, therefore, is only to be limited by the claims appended hereto.

## Claims

1. A method for changing a profile of an electronic device (101, 701) comprising a processing unit (120, 720) interconnected with a display device (126, 726), a clock device (127, 727) and at least one notification device (128, 728), said method implementable in said processing unit (120, 720), said method comprising:
determining that a current time provided by said clock device (127, 727) is within a given time period prior to a start time associated with calendar event data;
responsively controlling said display device (126, 726) to provide an indication of said calendar event data, said indication comprising a selectable option to change said profile of said electronic device (101, 701) from a first profile to a silent profile between said start time and an end time associated with said calendar event data;
receiving input data indicative that said selectable option has been selected; and, in response, at said start time,
changing said profile of said electronic device (101, 701) from said first profile to said silent profile such that said notification device (128, 728) is controlled to provide inaudible notifications when notification events occur.

2. The method of claim 1, further comprising, at said end time, changing said profile of said electronic device (101, 701) from said silent profile to said first profile.

3. The method of claim 1 or 2, further comprising:
determining that a given notification event is to occur between said start time and said end time; and, in response,
controlling said at least one notification device (128, 728) to provide an associated inaudible notification.

4. The method of any of claims 1 to 3, wherein said selectable option comprises at least one of a virtual button, a radio button, a checkbox, and an option in a drop down menu.

5. The method of any of claims 1 to 4, wherein said indication of said calendar event data comprises further selectable options to at least one of dismiss said indication and control said display device (126, 726) to provide said indication at a later time.

6. The method of any of claims 1 to 5, wherein said indication comprises a reminder of said calendar event data.

7. The method of any of claims 1 to 6, further comprising:
determining that a second current time provided by said clock device (127, 727) is within a second given time period prior to said end time;
responsively controlling said display device (126, 726) to provide a second indication, said second indication comprising an indication of said end time, said second indication comprising a second selectable option to delay changing said profile of said electronic device (101, 701) from said silent profile back to said first profile until a third given time period has passed following said end time;
receiving input data indicative that said second selectable option has been selected; and, in response, at a time comprising said third given time period added to said end time,
changing said profile of said electronic device (101, 701) from said silent profile back to said first profile.

8. The method of claim 7, further comprising:
repeating said controlling said display device (126, 726) to provide said second indication to determine a later time at which said profile of said electronic device (101, 701) is to be changed from said silent profile back to said first profile; and, changing said profile of said electronic device (101, 701) from said silent profile to said first profile at said later time rather than at said time comprising said third given time period added to said end time.

9. The method of any of claims 1 to 8, further comprising:
determining that a given notification event is to occur before said start time or after said end time; and, in response,
controlling at least one of said notification device (128, 728) and a second notification device (128, 728) to provide an associated audible notification

10. The method of any of claims 1 to 9, wherein said notification device (128, 728) comprises at least one of vibration device, a vibration motor, a light, an LED (light emitting diode) and said display device (126, 726).

11. A electronic device (101, 701) comprising:
a processing unit (120, 720) interconnected with a display device (126, 726), a clock device (127, 727) and at least one notification device (128, 728), said processing unit (120, 720) enabled to implement any of the steps of claims 1 to 10.

12. A computer program product, comprising a computer usable medium having a computer readable program code adapted to be executed to implement a method for changing a profile of an electronic device (101, 701) comprising a processing unit (120, 720) interconnected with a display device (126, 726), a clock device (127, 727) and at least one notification device (128, 728), said method implementable in said processing unit (120, 720), said method comprising:
determining that a current time provided by said clock device (127, 727) is within a given time period prior to a start time associated with calendar event data;
responsively controlling said display device (126, 726) to provide an indication of said calendar event data, said indication comprising a selectable option to change said profile of said electronic device (101, 701) from a first profile to a silent profile between said start time and an end time associated with said calendar event data;
receiving input data indicative that said selectable option has been selected; and, in response, at said start time,
changing said profile of said electronic device (101, 701) from said first profile to said silent profile such that said notification device (128, 728) is controlled to provide inaudible notifications when notification events occur.
